(19) Europäisches Patentamt
European Patent Office
Office européen des brevets

(11) Veröffentlichungsnummer: **0 379 467 A2**

(12) **EUROPÄISCHE PATENTANMELDUNG**

(21) Anmeldenummer: **90810029.0**

(22) Anmeldetag: **11.01.90**

(51) Int. Cl.$^5$: **C08G 69/26, C08G 73/10, C08G 73/14**

(30) Priorität: **20.01.89 CH 179/89**

(43) Veröffentlichungstag der Anmeldung: **25.07.90 Patentblatt 90/30**

(84) Benannte Vertragsstaaten: **DE ES FR GB IT NL SE**

(71) Anmelder: **CIBA-GEIGY AG**
**Klybeckstrasse 141**
**CH-4002 Basel(CH)**

(72) Erfinder: **Eldin, Sameer H., Dr.**
**Route de Schiffenen 10**
**CH-1700 Fribourg(CH)**
Erfinder: **Schmid, Rolf, Dr.**
**Buhnenstock 14**
**CH-3150 Schwarzenburg(CH)**

(54) **Hydroxylgruppen-endständige stickstoffhaltige Polymere.**

(57) Hydroxylgruppen-endständige stickstoffhaltige Polymere der Formel I

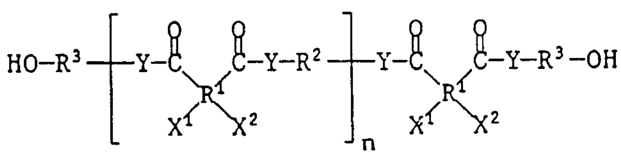

(I),

worin $X^1$ und $X^2$ unabhängig voneinander für -H oder $-\overset{O}{\overset{\|}{C}}$ Z stehen, Z für OH und Y für NH steht oder Z und Y zusammen N bedeuten, n eine ganze Zahl von 1 bis 2000 ist, $R^1$ beispielsweise ein Rest der Formel VIIa ist

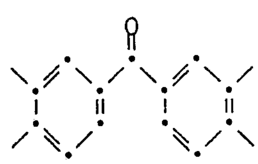

(VIIa)

$R^2$ beispielsweise zu 95 Mol % aus Gruppen der Formel II und zu 5 Mol % aus Gruppen der Formel III besteht

EP 0 379 467 A2

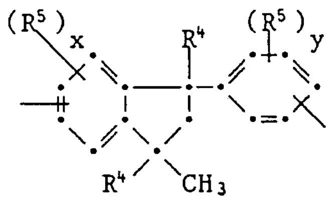 (II), 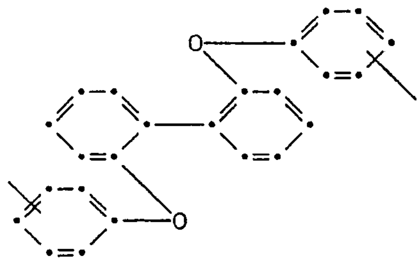 (III),

mit $R^4$ gleich Wasserstoff oder $C_1$-$C_4$-Alkyl, $R^5$ unabhängig voneinander gleich Wasserstoff, Halogen oder $C_1$-$C_4$-Alkyl, x gleich Null oder eine ganze Zahl von 1-3 und y gleich Null oder eine ganze Zahl von 1-4, und $R^3$ beispielsweise 1,4-Phenylen bedeutet, eignen sich beispielsweise als Matrixharze, insbesondere im Gemisch mit Epoxidharzen zur Formulierung von Matrixharzen mit sehr hoher Zähigkeit.

## Hydroxylgruppen-endständige stickstoffhaltige Polymere

Die Erfindung betrifft hydroxylgruppen-endständige stickstoffhaltige Polymere, d.h. bestimmte hydroxylgruppen-endständige Polyamide, Polyamid-amidsäuren, Polyamidsäuren sowie die zum entsprechenden Polyamidimid oder Polyimid cyclisierten Derivate, enthaltend als Diamin ein Phenylindandiamin und/oder ein 2,2′-Bis(aminophenoxy)biphenyl, ein Verfahren zur Herstellung dieser Polymere, deren Verwendung, härtbare Epoxidharz-Stoffgemische enthaltend diese Polymere, die daraus erhältlichen vernetzten Produkte sowie Faserverbundsysteme enthaltend die besagten Polymere und Verstärkungsfaser.

Polyamide, Polyamid-amidsäuren, Polyamidsäuren und die entsprechenden cyclisierten Derivate, welche unter Verwendung eines 2,2′-Bis(aminophenoxy)biphenyls hergestellt wurden und keine reaktiven Endgruppen aufweisen, sind aus der US 4,196,144 und US 4,239,880 bekannt.

Von Phenylindandiaminen und Dianhydriden abgeleitete Polyimide werden in der US 3,856,752 beschrieben. Auch diese Polymere enthalten keine reaktiven Endgruppen.

Phenol-endverkappte Polyimide, welche als Diamin weder ein Phenylindandiamin noch ein Bis(aminophenoxy)biphenyl enthalten, sind aus der US 4,026,871 bekannt. Diese Polyimide werden zur Kettenverlängerung bzw. Erhöhung des Molekulargewichts mit Formaldehyd, mit Verbindungen, welche unter den Reaktionsbedingungen Formaldehyd freisetzen oder mit Hexamethylentetramin in Gegenwart von katalytischen Mengen von Kalk umgesetzt.

Gegenstand vorliegender Erfindung sind hydroxylgruppen-endständige stickstoffhaltige Polymere der Formel I

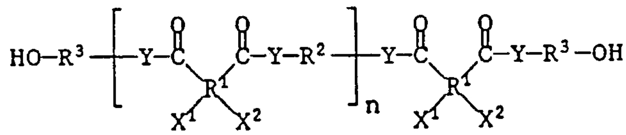 (I),

worin $X^1$ und $X^2$ unabhängig voneinander für -H oder $-\overset{O}{\overset{\|}{C}}Z$ stehen, Z für OH und Y für NH steht oder Z und Y zusammen N bedeuten, n eine ganze Zahl von 1 bis 2000 ist, $R^1$ ein Rest ist, der mindestens einen aromatischen Ring enthält, wobei die Carbonylgruppen an verschiedene Kohlenstoffatome im Ring gebunden sind und, falls mindestens eines von $X^1$ und $X^2$ für die Gruppe $-\overset{O}{\overset{\|}{C}}-Z$ steht, sich diese Gruppe jeweils in ortho- oder peri-Stellung zu einer der Carbonylgruppen befindet, so dass bei einer Cyclisierung fünf- oder sechsgliedrige Imidringe gebildet werden, $R^2$ einen aliphatischen Rest mit mindestens 2 C-Atomen, einen cycloaliphatischen, araliphatischen, carbocyclisch-aromatischen oder heterocyclisch-aromatischen Rest bedeutet, wobei mindestens 10 Mol % der Reste $R^2$ für einen Rest der Formel II und/oder III stehen

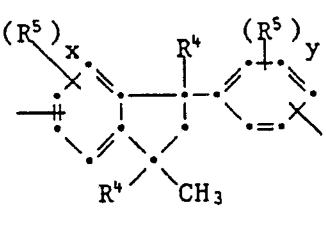 (II), 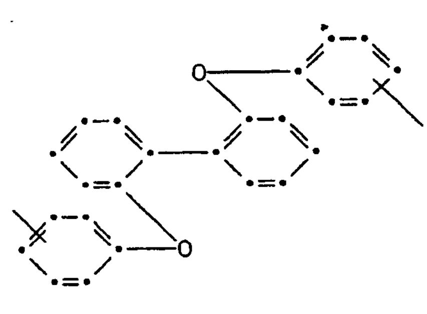 (III),

mit $R^4$ gleich H oder $C_1$-$C_4$-Alkyl, die Reste $R^5$ unabhängig voneinander gleich Wasserstoff, Halogen oder $C_1$-$C_4$-Alkyl, x gleich Null oder eine ganze Zahl von 1-3 und y gleich Null oder eine ganze Zahl von 1-4, und $R^3$ ein zweiwertiger aromatischer Rest mit 6-12 C-Atomen oder ein Rest der Formel IV ist

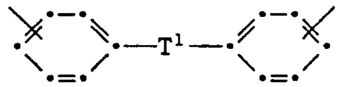

(IV),

worin $T^1$ eine direkte Bindung, Methylen, Isopropyliden, O, CO, NH, S oder $SO_2$ bedeutet.

Die erfindungsgemässen Polymere eignen sich beispielsweise als Matrixharze mit ausgezeichneten Eigenschaften. Insbesondere im Gemisch mit Epoxidharzen ergeben sie Matrixharze mit sehr hoher Zähigkeit.

Die erfindungsgemässen Polymere weisen im allgemeinen eine inhärente Viskosität von 0,1 bis 2,0, vorzugsweise von 0,2 bis 1,5, insbesondere von 0,2 bis 0,8 dl/g auf.

Es ist allgemein bekannt, dass die inhärente Viskosität ein Mass für das Molekulargewicht von Polymeren darstellt. Die angegebenen Werte der inhärenten Viskosität von 0,1 bis 2,0 entsprechen einem durchschnittlichen Molekulargewicht von etwa $10^3$ bis $10^6$.

Bevorzugt werden erfindungsgemässe Polymere, worin n eine ganze Zahl von 2 bis 200, insbesondere von 2 bis 50 ist.

Bevorzugt werden auch Polymere, worin mindestens 30 Mol %, insbesondere mindestens 50 Mol % der Reste $R^2$ für eine Gruppe der Formel II und/oder III stehen.

Bei den wiederkehrenden Strukturelementen der Formel Ia

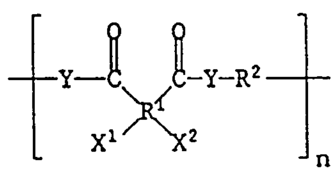

(Ia)

der erfindungsgemässen Polymeren können $R^1$, $R^2$, $X^1$, $X^2$ und Y unterschiedliche Bedeutung haben. Bei den erfindungsgemässen Polymeren handelt es sich somit um Homopolymere oder um Copolymere mit statistischer Verteilung einzelner Strukturelemente mit unterschiedlicher Bedeutung von $R^1$, $R^2$, $X^1$, $X^2$ und Y.

Im Strukturelement der Formel Ia stellen $X^1$ und $X^2$ vorzugsweise jeweils eine Gruppe $-\overset{O}{\overset{\|}{C}}-Z$ dar. Besonders bevorzugt werden dabei cyclisierte Derivate, worin Z und Y zusammen N bedeuten. Unter den erfindungsgemässen Polymeren sind daher hydroxylgruppen-endständige Polyimide der Formel V bevorzugt

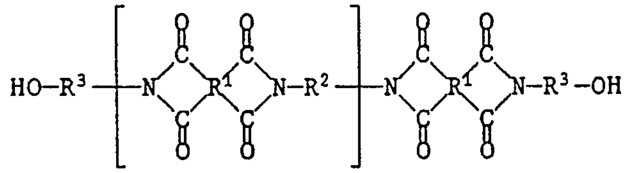

(V),

worin $R^1$, $R^2$, $R^3$ und n die oben angegebene Bedeutung haben.

Die Reste $R^1$ der erfindungsgemässen Polymere werden von Di-, Tri- oder Tetracarbonsäuren abgeleitet. Es kommt dabei im Prinzip jede Di-, Tri-oder Tetracarbonsäure in Frage, welche nach Entfernen der Carboxylgruppen die definitionsgemässen Reste $R^1$ ergibt.

Der Rest $R^1$ kann z.B. einen carbocyclisch-aromatischen oder heterocyclisch-aromatischen Rest oder einen Rest der neben aromatischen Ringen auch einen cycloaliphatischen Ring aufweist, wie z.B. einen Phenylindanrest, bedeuten.

Bedeutet $R^1$ einen carbocyclisch-aromatischen Rest, so weist dieser bevorzugt mindestens einen 6-gliedrigen Ring auf; insbesondere handelt es sich dabei um monocyclische, um kondensierte polycyclische oder um polycyclische Reste mit mehreren cyclischen, kondensierten oder nicht kondensierten Systemen, die miteinander direkt oder über Brückenglieder verbunden sein können. Als geeignete Brückenglieder seien beispielsweise erwähnt

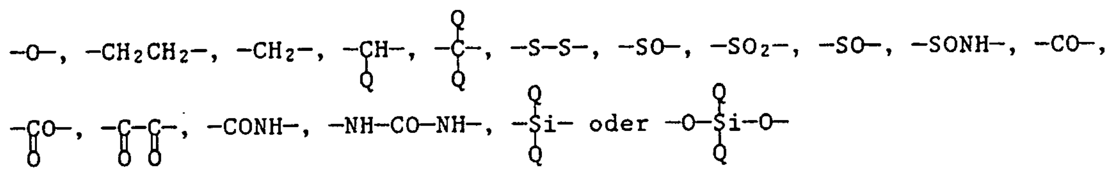

worin Q eine Alkylgruppe mit 1-6, vorzugsweise 1-4 Kohlenstoffatomen oder eine Phenylgruppe bedeutet.

Bedeutet $R^1$ einen heterocyclisch-aromatischen Rest, so kommen insbesondere 5- oder 6-gliedrige heterocyclisch-aromatische, gegebenenfalls benzo-kondensierte, O-, N- und/oder S-haltige Ringsysteme in Betracht.

Durch $R^1$ dargestellte carbocyclisch-aromatische oder heterocyclisch-aromatische Reste können auch substituiert sein, beispielsweise durch Nitrogruppen, Alkylgruppen mit 1-4 Kohlenstoffatomen, Trifluormethylgruppen, Halogenatome, insbesondere Chlor, Silyl-, Sulfonsäure- oder Sulfamoylgruppen.

$R^1$ bedeutet vorzugsweise einen unsubstituierten monocyclischen, einen kondensierten bicyclischen oder einen unkondensierten bicyclischen aromatischen Rest, wobei bei letzterem die Aromatenkerne über das Brückenglied $-CH_2-$, -O-, -CO- oder $-CO_2$ miteinander verbunden sind, oder einen vierwertigen Rest der Formel VI

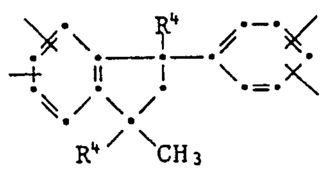

(VI),

worin $R^4$ die oben angegebene Bedeutung hat.

Geeignete Di-, Tri- und Tetracarbonsäuren bzw. deren Anhydride, von denen $R^1$ abgeleitet werden kann, sind beispielsweise Phthalsäure, Terephathalsäure, Isophthalsäure, 4,4′-Dicarboxydiphenylether, Naphthalin-2,6-dicarbonsäure, Thiophen-2,5-dicarbonsäure, Pyridin-2,3-dicarbonsäure, Trimellitsäureanhydrid, Pyromellitsäuredianhydrid, 2,3,9,10-Perylentetracarbonsäuredianhydrid, 1,4,5,8-Naphthalintetracarbonsäuredianhydrid, 2,6-Dichlornaphthalin-1,4,5,8-tetracarbonsäuredianhydrid, 2,7-Dichlornaphthalin-1,4,5,8-tetracarbonsäuredianhydrid, 2,3,6,7-Tetrachlornaphthalin-1,4,5,8-tetracarbonsäuredianhydrid, Phenanthren-1,8,9,10-tetracarbonsäuredianhydrid, 2,3,3′,4′-Benzophenontetracarbonsäuredianhydrid, 3,3′,4,4′-Benzophenontetracarbonsäuredianhydrid, 2,2′,3,3′-Benzophenontetracarbonsäuredianhydrid, 3,3′,4,4′-Biphenyltetracarbonsäuredianhydrid, 2,2′,3,3′-Biphenyltetracarbonsäuredianhydrid, 4,4′-Isopropylidendiphthalsäuredianhydrid, 3,3′-Isopropylidendiphthalsäuredianhydrid, 4,4′-Oxydiphthalsäuredianhydrid, 4,4′-Sulfonyldiphthalsäuredianhydrid, 3,3′-Oxydiphthalsäuredianhydrid, 4,4′-Methylendiphthalsäuredianhydrid, 4,4′-Thiodiphthalsäuredianhydrid, 4,4′-Ethylidendiphthalsäuredianhydrid, 2,3,6,7-Naphthalintetracarbonsäuredianhydrid, 1,2,4,5-Naphthalintetracarbonsäure dianhydrid, 1,2,5,6-Naphthalintetracarbonsäuredianhydrid, Benzol-1,2,3,4-tetracarbonsäuredianhydrid, Pyrazin-2,3,5,6-tetracarbonsäuredianhydrid, Thiophen-2,3,4,5-tetracarbonsäuredianhydrid.

Besonders geeignet sind auch Phenylindandi-, -tri- und -tetracarbonsäuren, insbesondere Phenylindandianhydride der Formel VIa

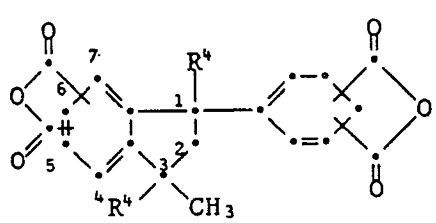

(VIa),

worin $R^4$ Wasserstoff oder $C_1$-$C_4$-Alkyl bedeutet.

Beispiele solcher Dianhydride sind: 1-(3′,4′-Dicarboxyphenyl)-1,3,3-trimethylindan-5,6-dicarbonsäuredianhydrid, 1-(3′,4′-Dicarboxyphenyl)-1,3,3-trimethylindan-6,7-dicarbonsäuredianhydrid, 1-(3′,4′-Dicarboxyphenyl)-3-methylindan-5,6-dicarbonsäuredianhydrid und 1-(3′,4′-Dicarboxyphenyl)-3-methylindan-6,7-dica-

rbonsäuredianhydrid. Solche Phenylindandianhydride und deren Herstellung sind in der US 3,577,442 beschrieben.

Besonders bevorzugt werden erfindungsgemässe Polymere worin $R^1$ ein Rest der Formel VI mit $R^4$ gleich Methyl, oder ein Rest der Formel VII ist

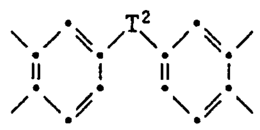

(VII),

worin $T^2$ $CH_2$, O, $SO_2$ oder insbesondere CO bedeutet.

Der Rest $R^2$ der erfindungsgemässen Polymere ist zu mindestens 10 Mol % eine Gruppe der Formel II und/oder III. Dieser Rest wird von den entsprechenden Diaminen, von einem Phenylindandiamin bzw. einem 2,2′-Bis(aminophenoxy)biphenyl abgeleitet. Der restliche Teil, d.h. höchstens 90 Mol % der Diaminkomponente $H_2N$-$R^2$-$NH_2$ kann jedes Diamin, von dem der definitionsgemässe Rest $R^3$ abgeleitet wird, sein.

Bevorzugt werden Polymere, welche als $R^2$ sowohl den Rest der Formel II als auch den Rest der Formel III enthalten, insbesondere solche, worin $R^2$ ausschliesslich Gruppen der Formel II und der Formel III bedeutet. Dabei bestehen die Reste $R^2$ vorzugsweise zu 20-99 Mol %, insbesondere zu 60-99 Mol % aus Gruppen der Formel II und zu 80-1 Mol %, insbesondere zu 40-1 Mol % aus Gruppen der Formel III. Am meisten bevorzugt werden Polymere, worin $R^2$ zu 90-99 Mol % aus Gruppen der Formel II und zu 10-1 Mol % aus Gruppen der Formel III besteht.

Die Phenylindandiamin-Komponente der erfindungsgemässen Polymere kann aus irgendeiner Kombination von Isomeren der durch die Formel IIa bezeichneten Diaminoverbindungen bestehen,

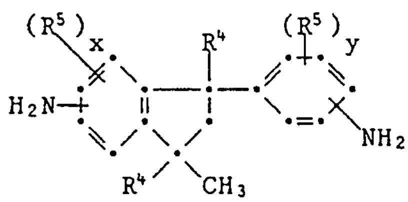

(IIa)

worin $R^4$, $R^5$, x und y die oben angegebene Bedeutung haben.

Die Phenylindandiamin-Komponente kann z.B. von 0 bis 100 Gew.-% 5-Amino-1-(4′-aminophenyl)-1,3,3-trimethylindan in Kombination mit 100 bis 0 % Gew.-% 6-Amino-1-(4′-aminophenyl)-1,3,3-trimethylindan enthalten. Weiterhin können eines oder beide dieser Iosmeren im ganzen Bereich von 0 bis 100 Gew.-% durch irgendeines der mit der Formel IIa bezeichneten substituierten Diaminoisomeren ersetzt werdeen. Beispiele solcher substituierter Diaminoisomeren sind 5-Amino-6-methyl-1-(3′-amino-4′-methylphenyl)-1,3,3-trimethylindan, 5-Amino-1-(4′-amino-Ar′,Ar′-dichlorphenyl)-Ar,Ar-dichlor-1,3,3-trimethylindan, 6-Amino-1-(4′-amino-Ar′,Ar′-dichlorphenyl)-Ar,Ar-dichlor-1,3,3-trimethylindan, 4-Amino-6-methyl-1-(3′-amino-4′-methylphenyl)-1,3,3-trimethylindan und Ar-Amino-1-(Ar′-amino-2′,4′-dimethylphenyl)-1,3,3,4,6-pentamethylindan. Ar und Ar′ in den obenerwähnten Verbindungen bezeichnen unbestimmte Stellungen der entsprechenden Substituenten an den Phenylringen.

Unter den Phenylindandiaminen der Formel IIa werden solche bevorzugt, worin $R^4$ Wasserstoff oder Methyl ist, und $R^5$ unabhängig voneinander Methyl, Chlor oder Brom sind und die Aminogruppen in Stellung 5, 6 oder 7 und in Stellung 3′ oder 4′ sind. Am meisten bevorzugt sind Phenylindandiamine der Formel IIa worin $R^4$ Methyl ist, x und y jeweils Null sind, und die Aminogruppen in Stellung 5 oder 6 und in Stellung 4′ sind.

Verschiedene Polyimide auf der Basis von Phenylindandiaminen und deren Synthesemethoden sind ausführlich in der US 3,856,752 beschrieben, die damit Bestandteil der vorliegenden Anmeldung ist.

2,2′-Bis(aminophenoxy)biphenyle der Formel IIIa

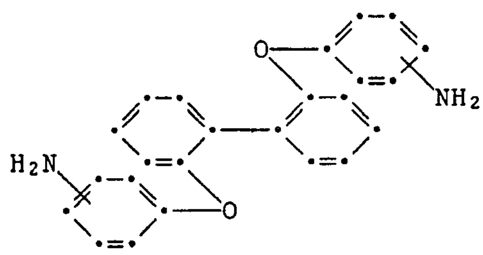

(IIIa)

und deren Herstellung sind in der US 4,196,144 beschrieben. Erfindungsgemäss werden als Diaminkomponente vorzugsweise Diamine der Formel IIIa eingesetzt, worin die zwei Aminogruppen jeweils in der ortho- und insbesondere in der para-Stellung des Benzolrings sind.

Durch $R^2$ dargestellte aliphatische, araliphatische, cycloaliphatische, carbocyclisch-aromatische oder heterocyclisch-aromatische Reste können unsubstituiert oder substituiert sein, z.B. durch Halogenatome, wie Fluor, Chlor oder Brom, oder durch Alkyl- oder Alkoxygruppen mit je 1-4 Kohlenstoffatomen.

Als aliphatische Reste $R^2$ kommen vor allem geradkettige oder verzweigte Alkylengruppen mit 2-12 Kohlenstoffatomen in Betracht, wobei die Alkylenkette auch durch Heteroatome, wie O-, S- oder N-Atome, unterbrochen sein kann.

$R^2$ in der Bedeutung eines cycloaliphatischen Restes stellt z.B. die 1,3-oder 1,4-Cyclohexylen-, 1,4-Bis-(methylen)cyclohexan- oder Dicyclohexylmethangruppe dar, während als araliphatische Reste vor allem 1,3-, 1,4- oder 2,4-Bis-alkylenbenzol-, 4,4′-Bisalkylen-diphenyl- und 4,4′-Bis-alkylen-diphenyletherreste in Betracht kommen.

Stellt $R^2$ einen carbocyclisch-aromatischen Rest dar, so handelt es sich dabei vorzugsweise um monocyclische, um kondensierte polycyclische oder um unkondensierte bicyclische aromatische Reste, wobei bei letzteren die Aromatenkerne über ein Brückenglied miteinander verbunden sind. Als Brückenglieder kommen z.B. die als $T^1$ in Formel IV oben bezeichneten Reste in Betracht.

Falls $R^2$ einen heterocyclisch-aromatischen Rest bedeutet, so handelt es sich insbesondere um heterocyclisch-aromatische 5- oder 6-gliedrige, O-, N- und/oder S-haltige Ringe.

Geeignete Diamine $H_2N\text{-}R^2\text{-}NH_2$ sind zum Beispiel o-, m- und p-Phenylendiamin- Diaminotoluole, wie 2,4-Diaminotoluol, 1,4-Diamino-2-methoxybenzol, 2,5-Diaminoxylol, 1,3-Diamino-4-chlorbenzol, 4,4′-Diaminodiphenylmethan, 4,4′-Diaminodiphenylether, 4,4′-Diaminodiphenylthioether, 4,4′-Diaminodiphenylsulfon, 2,2′-Diaminobenzophenon, 1,8- oder 1,5-Diaminonaphthalin, 2,6-Diaminopyryidin, 1,4-Piperazin, 2,4-Diaminopyrimidin, 2,4-Diamino-s-triazin, Di-, Tri-, Tetra-, Hexa-, Hepta-, Octa- und Decamethylendiamin, 2,2-Dimethylpropylendiamin, 2,5-Dimethylhexamethylendiamin, 4,4-Dimethylheptamethylendiamin, 3-Methylheptamethylendiamin, 3-Methoxyhexamethyldiamin, 2,11-Diaminododecan, 2,2,4- und 2,4,4-Trimethylhexamethylendiamin, 1,2-Bis(3-aminopropoxy)ethan, N,N′-Dimethylethylendiamin, N,N′-Dimethyl-1,6-diaminohexan sowie die Diamine der Formeln $H_2N(CH_2)_3O(CH_2)_2O(CH_2)_3NH_2$ und $H_2N(CH_2)_3S(CH_2)_3NH_2$; 1,4-Diaminocyclohexan, 1,4-Bis(2-methyl-4-aminopentyl)benzol, 1,4-Bis(aminomethyl)benzol.

Besonders bevorzugt als Diamin-Komponente werden carbocyclisch-aromatische Diamine, insbesondere substituierte zweikernige Diamine, wie beispielsweise Bis(4-amino-3,5-dialkylphenyl)methane oder Bis(4-amino-3-chlor-5-alkylphenyl)methane. Diese Verbindungen sind zum Beispiel in der EP-A 171,588 beschrieben. Geeignete solche Diamine sind beispielsweise Bis(3-methyl-4-amino-5-ethylphenyl)methan, Bis(3-methyl-4-amino-5-isopropylphenyl)methan, Bis(3,5-diisopropyl-4-aminophenyl)methan, Bis(2-chlor-3,5-diethyl-4-aminophenyl)methan, Bis(3-ethyl-4-amino-5-sek.-butylphenyl)methan, Bis(2,6-dichlor-3,5-diethyl-4-aminophenyl)methan und insbesondere Bis(3,5-diethyl-4-aminophenyl)methan.

Der Rest $R^3$ der erfindungsgemässen Polymere wird von Aminophenolen der Formel XI, $H_2N\text{-}R^3\text{-}OH$ abgeleitet. Bedeutet $R^3$ einen zweiwertigen aromatischen Rest mit 6-12 C-Atomen, kann dieser unsubstituiert sein oder einen oder mehrere $C_1$-$C_4$-Alkylgruppen oder Halogenatome, insbesondere Chlor oder Brom als Substituenten enthalten.

Bevorzugt werden Polymere, worin $R^3$ 1,2-, 1,3- oder 1,4-Phenylen oder einen Rest der Formel IV bedeutet, worin die freien Bindungen in 4,4′-Stellung sind. Besonders bevorzugt als $R^3$ ist ein Rest der Formel

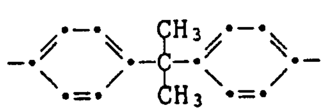

oder insbesondere 1,4-Phenylen.

Die erfindungsgemässen Polymere, die hydroxylgruppen-endständigen Polyamide, Polyamid-amidsäuren, Polyamidsäuren sowie die zum entsprechenden Polyamidimid oder Polyimid cyclisierten Derivate, können hergestellt werden durch Umsetzung eines Diamins der Formel VIII

$H_2N\text{-}R^2\text{-}NH_2$ (VIII)

mit einem amidbildenden Derivat einer Di-, Tri- oder Tetracarbonsäure der Formel IX

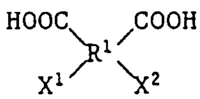

(IX)

zu einem Polymer der Formel X

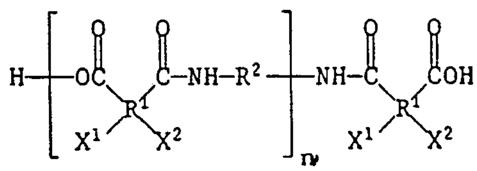

(X),

und anschliessende Umsetzung dieses Polymers oder dessen amidbildenden Derivats mit einem Aminophenol der Formel XI

$H_2N\text{-}R^3\text{-}OH$ (XI),

gegebenenfalls gefolgt von einer Cyclisierung der so erhaltenen Polymeren, falls $X^1$ und/oder $X^2$ $-\overset{O}{\overset{\|}{C}}-Z$ bedeuten, zu den entsprechenden Imiden, wobei die Verbindungen der Formeln VIII, IX, X und XI jeweils im wesentlichen in stöchiometrischem Verhältnis eingesetzt werden, und wobei $R^1$, $R^2$, $R^3$, $X^1$, $X^2$, Z und n die oben angegebene Bedeutung haben.

Geeignete amidbildende Derivate der Carbonsäuren der Formeln IX oder X sind z.B. deren Ester, Halogenide, wie Chloride, oder Anhydride.

Im allgemeinen führt man die oben angegebene Umsetzung in einem üblichen inerten organischen Lösungsmittel, vorzugsweise in einem polaren, aprotischen Lösungsmittel, wie beispielsweise Dimethylsulfoxid, N,N-Dimethylformamid, N,N-Dimethylacetamid, N,N-Diethylacetamid, Tetramethylharnstoff, N-Methylcaprolactam, N-Methyl-2-pyrrolidon, Aceton, Dioxan, Essigester oder Tetrahydrofuran, durch. Dabei werden Temperaturen von etwa -20 °C bis etwa 50 °C angewendet.

Die allfällige Cyclisierung der so erhaltenen Polyamid-amidsäuren oder Polyamidsäuren erfolgt nach an sich bekannter Weise chemisch oder thermisch.

Die chemische Cyclisierung wird zweckmässig durch Behandlung mit einem Dehydratisierungsmittel allein oder im Gemisch mit einem tertiären Amin vorgenommen. In Frage kommen z.B. Essigsäureanhydrid, Propionsäureanhydrid und Dicyclohexylcarbodiimid oder Gemisch von Essigsäureanhydrid und Triethylamin.

Die thermische Cyclisierung wird durch Erhitzen auf Temperaturen von etwa 50 °C bis 300 °C, vorzugsweise etwa 150 °C bis 250 °C, und gegebenenfalls unter Zusatz eines inerten organischen Lösungsmittels vorgenommen.

Die erfindungsgemässen hydroxylgruppen-endständigen Polymere eignen sich zur Herstellung von Formkörpern verschiedenster Art, wie Fasern, Filme, Folien, Ueberzugsmassen, Schaumstoffe, Laminierharze, Verbundwerkstoffe, Presspulver, Presskörper etc., auf an sich bekannte Weise, gewünschtenfalls unter Verwendung übliche Zusatzstoffe, wie Pigmente, Füllmittel und dergleichen. Die erfindungsgemässen Polymere lassen sich auch leicht aus der Schmelze verarbeiten und zeichnen sich durch gute mechanische, elektrische und thermische Eigenschaften sowie im allgemeinen durch gute Löslichkeit in organischen Lösungsmitteln, wie z.B. N,N-Dimethylacetamid, N,N-Dimethylformamid und N-Methyl-2-pyrrolidon, aus.

Die erfindungsgemässen Polymere inbesondere die erfindungsgemässen Polyimide, sind besonders geeignet für eine Verwendung in härtbaren Epoxidharz-Stoffgemischen. Sie sind mit Epoxidharzen gut mischbar, die Gemische bilden eine homogene Schmelze mit relativ niedriger Schmelztemperatur (beispielsweise von ca. 200 °C) und die ausgehärteten Produkte weisen im allgemeinen einen einzigen Glasübergang auf. Sie zeichnen sich durch hohe Zähigkeit bei gleichzeitig hoher Wärmeformbeständigkeit aus und sind daher insbesondere zur Formulierung von Matrixharzen zur Herstellung von Prepregs und

hoch-zäher Verbundstoffe oder zur Herstellung von Klebstoffen oder Klebefilmen geeignet.

Gegenstand der Erfindung sind daher auch härtbare Stoffgemische enthaltend

(a) ein erfindungsgemässes Polymer der Formel I

(b) ein Epoxidharz und gegebenenfalls

(c) ein Härtungsmittel und/oder einen Härtungsbeschleuniger für Epoxidharze.

Gegenstand der Erfindung sind auch die durch Härtung dieser Gemische erhältlichen vernetzten Produkte.

Ein weiterer Gegenstand der Erfindung ist ein Faserverbundsystem enthaltend Verstärkungsfaser, wie z.B. Glasfasern, Kohlefasern oder Aramidfasern, und ein Polymer der Formel I.

Da die erfindungsgemässen Polymere endständige phenolische Hydroxylgruppen aufweisen, können sie mit Epoxidharzen reagieren und somit selbst als Härtungsmittel für Epoxidharze verwendet werden. Falls zweckmässig, können den härtbaren Gemischen noch weitere dem Fachmann bekannte Härtungsmittel, insbesondere niedermolekulare Di- oder Polyphenole, und/oder Härtungsbeschleuniger für Epoxidharze beigegeben werden. Im allgemeinen wird bei Verwendung der erfindungsgemässen Polymere mit einem höheren Molekulargewicht (z.B. von über 5000) vorzugsweise noch ein zusätzliches Härtungsmittel für Epoxidharze beigegeben, während bei Verwendung relativ niedermolekularer Verbindungen der Formel I diese alleine als Härter eingesetzt werden können. Die Gesamtmenge des Härters entspricht vorzugsweise etwa der stöchiometrisch benötigten Menge.

Als Epoxidharz-Komponente (b) der erfindungsgemässen härtbaren Stoffgemisch können im Prinzip alle dem Fachmann bekannten Harze verwendet werden. Das gleiche gilt für die allfällig mitverwendete Härter-Komponente (c). Geeignete Harze sind beispielsweise in der EP-A 194,232 beschrieben. Geeignete Härter und/oder Härtungsbeschleuniger sind z.B. in der US 4,649,181 offenbart. Die Härtung der erfindungsgemässen Mischungen wird zweckmässig im Temperaturintervall von 50 bis 300 °C, vorzugsweise von 100 bis 250 °C durchgeführt.

Die erfindungsgemässen Stoffgemische können, falls zweckmässig noch hochmolekulare Thermoplasten, insbesondere mit den Polymeren der Formel I gut mischbare Polyimide oder Polyetherimide ohne reaktive Endgruppen enthalten. Dazu besonders geeignet sind die von Phenylindandiaminen und Dianhydriden abgeleitete Polyimide gemäss der US 3,856,752.

Die folgenden Beispiele erläutern die Erfindung.

## I. Herstellungsbeispiele

### Beispiel 1: Synthese eines Polyetherimids mit phenolischen Endgruppen (Formelmolekulargewicht 20'000)

Ansatz:

I 4,49 g (0,0122 Mol, 5 Mol %) 2,2′-Bis(p-aminophenoxy)biphenyl

II 61,49 g (0,2317 Mol, 95 Mol %) 5(6)-Amino-1-(4′-aminophenyl)-1,3,3-trimethylindan (Isomerengemisch)

III 80,56 g (0,250 Mol) 3,3′,4,4′-Benzophenontetracarbonsäuredianhydrid

IV 1,33 g (0,0122 Mol) 4-Aminophenol

V 1300 ml N,N-Dimethylacetamid

VI 63,8 g (0,625 Mol) Essigsäureanhydrid

VII 12,65 g (0,125 Mol) Triethylamin

In einem 2,5 l Sulfurierkolben mit Thermometer, Glaspropellerrührer, Kühler, Kühlbad und $N_2$-Anschluss werden I, II und V unter Stickstoff vorgelegt und die entstehende klare, hellrotbraune Lösung wird auf -15 °C abgekühlt. Anschliessend wird III in die Lösung eingetragen und die resultierende Suspension wird während 2 h unter langsamer Erwärmung auf 12 °C weitergerührt. Es entsteht eine gelbliche Lösung. IV wird dazugegeben und während einer weiteren Stunde nachgerührt. Die Temperatur steigt dabei von 13 auf 19 °C an. Bei 19 °C werden VI und VII beigegeben. Die Temperatur steigt dabei auf 27 °C. Das Gemisch wird während ca. 19 h bei Raumtemperatur gerührt. Zur Isolierung des Polyimids wird die rötlich-gelbe Lösung in Wasser eingetragen (Mixer) und mit Wasser und Ethanol gewaschen. Das Produkt (hellgelbes, feines Pulver) wird im Vakuum bei 70 - 80 °C getrocknet. Ausbeute 138,7 g (94 d.Th.)

Produkte-Charakterisierung:

$\eta_{inh}$: 0,673 dl/g (0,5 % in N,N-Dimethylacetamid bei 25° C).

Beispiel 2: Synthese eines Polyetherimids mit phenolischen Endgruppen (Formelmolekulargewicht 12'500)

Beispiel 1 wird unter Verwendung der unten aufgeführten Edukte wiederholt. Da die Menge von 4-Aminophenol im Vergleich zu den zwei Diaminen etwas grösser ist, erhält man ein Polyetherimid mit kleinerem Molekulargewicht (tiefere $\eta_{inh}$).

Ansatz:

I 4,42 g (0,0120 Mol, 5 Mol %) 2,2′-Bis(p-aminophenoxy)biphenyl
II 60,60 g (0,2284 Mol, 95 Mol %) 5(6)-Amino-1-(4′aminophenyl)-1,3,3-trimethylindan (Isomerengemisch)
III 80,56 g (0,250 Mol) 3,3′,4,4′-Benzophenontetracarbonsäureanhydrid
IV 2,10 g (0,0192 Mol) 4-Aminophenol
V 1300 ml N,N-Dimethylacetamid
VI 63,8 g (0,625 Mol) Essigsäureanhydrid
VII 12,65 g (0,125 Mol) Triethylamin Ausbeute 139,8 g (95 % d.Th.)
$\eta_{inh}$: 0,426 dl/g (0,5 % in N,N-Dimethylacetamid bei 25° C).

Beispiel 3: Synthese eines Polyetherimids mit phenolischen Endgruppen (Formelmolekulargewicht 5'000)

Beispiel 1 wird unter Verwendung der unten aufgeführten Edukte wiederholt. Eine weitere Erhöhung der Menge von 4-Aminophenol führt zu einem Polyetherimid mit noch kleinerem Molekulargewicht.

Ansatz:

I 4,14 g (0,0113 Mol, 5 Mol %) 2,2′-Bis(p-aminophenoxy)biphenyl
II 56,71 g (0,2138 Mol, 95 Mol %) 5(6)-Amino-1-(4′-aminophenyl)-1,3,3-trimethylindan (Isomerengemisch)
III 80,56 g (0,250 Mol) 3,3′,4,4′-Benzophenontetracarbonsäureanhydrid
IV 5,46 g (0,050 Mol) 4-Aminophenol
V 1300 ml N,N-Dimethylacetamid
VI 63,8 g (0,625 Mol) Essigsäureanhydrid
VII 12,65 g (0,125 Mol) Triethylamin Ausbeute 133,2 g (91 % d.Th.)
$\eta_{inh}$: 0,223 dl/g (0,5 % in N,N-Dimethylacetamid bei 25° C).

Beispiel 4: Synthese eines Polyetherimids mit phenolischen Endgruppen (Formelmolekulargewicht 12'500)

Beispiel 1 wird unter Verwendung der unten aufgeführten Edukte wiederholt. Die Diamine I und II werden in äquimolaren Mengen eingesezt.

Ansatz:

I 43,80 g (0,119 Mol, 50 Mol %) 2,2′-Bis(p-aminophenoxy)biphenyl
II 31,58 g (0,119 Mol, 50 Mol %) 5(6)-Amino-1-(4′-aminophenyl)-1,3,3-trimethylindan (Isomerengemisch)
III 80,56 g (0,250 Mol %) 3,3′,4,4′-Benzophenontetracarbonsäuredianhydrid
IV 2,60 g (0,0238 Mol ) 4-Aminophenol
V 1300 ml N,N-Dimethylacetamid
VI 63,8 g (0,625 Mol) Essigsäureanhydrid
VII 12,65 g (0,125 Mol) Triethylamin Ausbeute 151,2 g (95 % d.Th.)
$\eta_{inh}$: 0,383 dl/g (0,5 % in N,N-Dimethylacetamid bei 25° C).

II. Anwendungsbeispiele

Beispiel A1:

165 g des Polyetherimids gemäss Beispiel 1, 50 g eines Tetraglycidylderivats von 4,4′-Diaminodiphenylmethan mit einem Epoxidgehalt von 7,8 Val/kg und einer mittleren Funktionalität von 3,2 Epoxidgruppen pro Molekül, 50 g eines bei Raumtemperatur flüssigen Epoxiphenolnovolaks einer Funktionalität von 2,2 mit einem Epoxidgehalt von 5,7 Val/kg und 65 g 4,4′-Dihydroxydiphenylether werden in 765 g Methylenchlorid gelöst. Mit einer Rakel wird mit der Lösung auf einem Silikonpapier ein Film gezogen. Nach dem Trocknen (12 h bei 50° C und 30 min bei 90° C unter Vakuum) entsteht ein homogener zäher Film. Mehrere Lagen des Films werden während 10 min bei 20° C und ca. 300 kPA gepresst und anschliessend während 3 h bei 210° C im Ofen gehärtet. Der gehärtete Formteil (30 x 30 x 1 mm) hat eine einheitliche Tg (gemessen mittels thermomechanischer Analyse) von 193° C (Erweichungsbeginn bei 169° C).

Beispiel A2:

Je 50 g des im Beispiel A1 verwendeten Tetraglycidylderivats von 4,4′-Diaminodiphenylmethan und des Epoxiphenolnovolaks werden zu einer Lösung von 82 g des Polyetherimids gemäss Beispiel 1 und 82 g eines Polyimids mit Phenylindaneinheiten mit einer Glasumwandlungstemperatur von 305° C und einem durchschnittlichen Molekulargewicht von ca. 65000 (Matrimid® 5218, Ciba-Geigy) in Methylenchlorid zugegeben und gut gerührt. Die Lösung wird auf ca. 40 Gew.% Harzgehalt eingeengt. Anschliessend wird eine Lösung von 65 g 4,4′-Dihydroxydiphenylether in Methylethylketon unter Rühren zugegeben. Nach Abdunsten des Lösungsmittels bis ca. 70 Gew.% Feststoffgehalt wird ein Film gezogen und entsprechend Beispiel A1 verarbeitet. An den erhaltenen Formteilen wird eine Tg von 225° C (Beginn der Glasumwandlung bei 199° C) gemessen.

Beispiel A3:

25 g Polyetherimid gemäss Beispiel 3 werden in 200 g $CH_2Cl_2$ gelöst und 40 g des Tetraglycidylethers von 2,2,6,6-Tetramethylolcyclohexanol (hergestellt gemäss Beispiel 2 der US 4,549,008) mit einem Epoxidäquivalentgewicht von 129 und 60 g des im Beispiel A1 verwendeten Epoxiphenolnovolaks werden zugegeben. Das Lösungsmittel wird unter Erwärmung abgedampft und die verbleibende Mischung wird anschliessend nach Zugabe von 58 g 4,4′-Dihydroxydiphenylether und 0,1 g 2-Phenylimidazol wie im Beispiel A4 verarbeitet. Die erhaltenen Formkörper haben folgende Eigenschaften:
Tg = 115° C
Biegefestigkeit (ISO 178) = 122 MPa
Biegedehnung (ISO 178) = >13,5% (ohne Bruch)

Beispiel A4:

82 g Polyetherimid gemäss Beispiel 21 und 82 g eines Polyimids mit Phenylindaneinheiten mit einer Glasumwandlungstemperatur von 305° C und einem durchschnittlichen Molekulargewicht von ca. 65'000 (Matrimid® 5218, Ciba-Geigy) werden in 200 g Methylenchlorid gelöst. Anschliessend werden 50 g des im Beispiel A1 verwendeten Tetraglycidylderivats von 4,4′-Diaminodiphenylmethan und 50 g des im Beispiel A1 verwendeten Epoxiphenolnovolaks zugegeben und mit der Thermoplastlösung gut vermischt. Nach Abdampfen des Lösungsmittels bis zu einer ca. 60 Gew.%-igen Lösung wird eine zweite Lösung von 65 g 4,4′-Dihydroxydiphenylether und 0,1 g 2-Ethyl-4-methylimidazol in 40,3 g Methylethylketon unter Rühren zugetropft. Das Lösungsmittel wird weiter unter Rühren abgedampft bis eine klare Lösung entsteht. Mit einer Rakel wird auf einem Silikonpapier ein Film gezogen. Nach dem Trocknen (12 h bei 50° C und 30 min bei 90° C unter Vakuum) entsteht ein homogener, zäher Film. Mehrere Lagen des Films werden während 10 min bei 200° C gepresst und anschliessend 2 h bei 200° C im Ofen gehärtet. Der gehärtete Formteil (30 x 30 x 1 mm) hat eine Tg von 155° C. (Erweichungsbeginn bei 141° C).

Ein Teil der Lösung wird zur Imprägnierung eines Gewebes aus längsgerichteten Kohlefasern (T 300), die mit wenig Thermoplastfasern als Schuss zusammengehalten werden ("Quasi-UD-Gewebe" G 827 von

Brochier SA) verwendet. Nach Trocknen und Pressen werden Laminatplatten mit folgenden Eigenschaften erhalten:
Biegefestigkeit quer zur Faser (ISO 178) = 76 MPa
Biegefestigkeit in Hauptfaserrichtung = 1204 MPa
Tg = 225 °C

Beispiel A5:

Bei Verwendung von 82 g eines Polyetherimids mit wiederkehrenden Einheiten der Formel

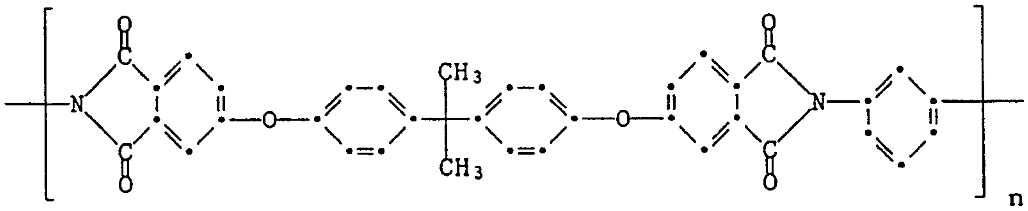

und einer Glasumwandlungstemperatur von 219 °C, (Ultem® 1000 der General Electric) anstelle des Polyimids gemäss Beispiel A4 und sonst gleicher Zusammensetzung und Verarbeitung wie Beispiel A4 erhält man ein Laminat mit den folgenden Eigenschaften:
Tg = 207 °C
Biegefestigkeit in Hauptfaserrichtung = 1395 MPa
Biegefestigkeit quer zur Hauptfaserrichtung = 65 MPa.

**Ansprüche**

1. Hydroxylgruppen-endständige stickstoffhaltige Polymere der Formel I

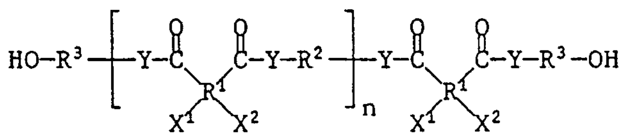

(I),

worin $X^1$ und $X^2$ unabhängig voneinander für -H oder - $\overset{\overset{O}{\|}}{C}$ Z stehen, Z für OH und Y für NH steht oder Z und Y zusammen N bedeuten, n eine ganze Zahl von 1 bis 2000 ist, $R^1$ ein Rest ist, der mindestens einen aromatischen Ring enthält, wobei die Carbonylgruppen an verschiedene Kohlenstoffatome im Ring gebunden sind und, falls mindestens eines von $X^1$ und $X^2$ für die Gruppe - $\overset{\overset{O}{\|}}{C}$ -Z steht, sich diese Gruppe jeweils in ortho- oder peri-Stellung zu einer der Carbonylgruppen befindet, so dass bei einer Cyclisierung fünf- oder sechsgliedrige Imidringe gebildet werden, $R^2$ einen aliphatischen Rest mit mindestens 2 C-Atomen, einen cycloaliphatischen, araliphatischen, carbocyclisch-aromatischen oder heterocyclisch-aromatischen Rest bedeutet, wobei mindestens 10 Mol % der Reste $R^2$ für einen Rest der Formel II und/oder III stehen

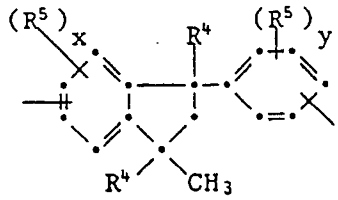 (II), 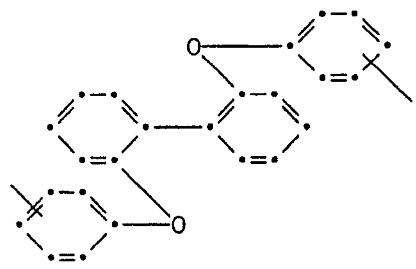 (III),

mit $R^4$ gleich H oder $C_1$-$C_4$-Alkyl, die Reste $R^5$ unabhängig voneinander gleich Wasserstoff, Halogen oder $C_1$-$C_4$-Alkyl, x gleich Null oder eine ganze Zahl von 1-3 und y gleich Null oder eine ganze Zahl von 1-4, und $R^3$ ein zweiwertiger aromatischer Rest mit 6-12 C-Atomen oder ein Rest der Formel IV ist

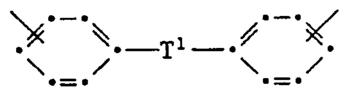 (IV),

worin $T^1$ eine direkte Bindung, Methylen, Isopropyliden, O, CO, NH, S oder $SO_2$ bedeutet.

2. Polymere nach Anspruch 1, worin $X^1$ und $X^2$ jeweils für

$-\overset{O}{\overset{\|}{C}}$ Z stehen.

3. Hydroxylgruppen-endständige Polyimide nach Anspruch 2 der Formel V

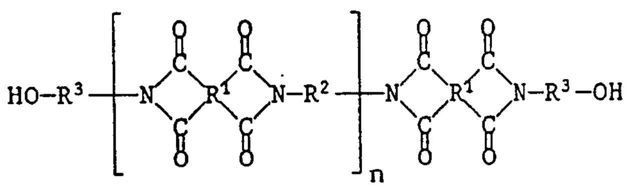 (V),

worin $R^1$, $R^2$, $R^3$ und n die im Anspruch 1 angegebene Bedeutung haben.

4. Polymere nach Anspruch 1, worin n eine ganze Zahl von 2 bis 200 ist.

5. Polymere nach Anspruch 1, worin mindestens 30 Mol % der Reste $R^2$ für eine Gruppe der Formel II und/oder III stehen.

6. Polymere nach Anspruch 1, worin die Reste $R^2$ zu 20-99 Mol % aus Gruppen der Formel II und zu 80-1 Mol % aus Gruppen der Formel III bestehen.

7. Polymere nach Anspruch 1, worin $R^1$ einen unsubstituierten monocyclischen, einen kondensierten bicyclischen oder einen unkondensierten bicyclischen aromatischen Rest darstellt, wobei bei letzterem die Aromatenkerne über das Brückenglied $-CH_2-$, -O-, -CO- oder $-SO_2$ miteinander verbunden sind, oder einen vierwertigen Rest der Formel VI darstellt

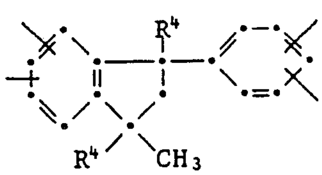 (VI),

worin $R^4$ die in Anspruch 1 angegebene Bedeutung hat.

8. Polymere nach Anspruch 7, worin $R^1$ ein Rest der Formel VI mit $R^4$ gleich Methyl, oder ein Rest der Formel VII ist

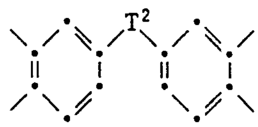 (VII),

worin $T^2$ $CH_2$, O, $SO_2$ oder CO bedeutet.

9. Polymere nach Anspruch 1, worin $R^3$ 1,2-, 1,3- oder 1,4-Phenylen oder einen Rest der Formel IV bedeutet, worin die freien Bindungen in 4,4′-Stellung sind.

10. Polymere nach Anspruch 9, worin $R^3$ einen Rest der Formel

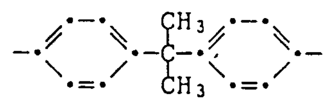

oder 1,4-Phenylen bedeutet.

11. Verfahren zur Herstellung von Polymeren nach Anspruch 1 durch Umsetzung eines Diamins der Formel VIII

$H_2N\text{-}R^2\text{-}NH_2$ (VIII)

mit einem amidbildenden Derivat einer Di-, Tri- oder Tetracarbonsäure der Formel IX

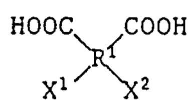 (IX)

zu einem Polymer der Formel X

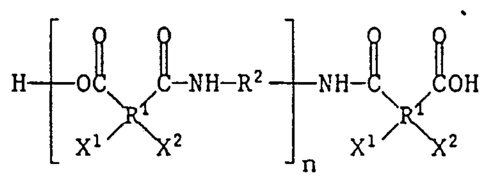 (X),

und anschliessende Umsetzung dieses Polymers oder dessen amidbildenden Derivats mit einem Aminophenol der Formel

$H_2N\text{-}R^3\text{-}OH$ (XI),

gegebenenfalls gefolgt von einer Cyclisierung der so erhaltenen Polymeren, falls $X^1$ und/oder $X^2$ - 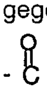 -Z bedeuten, zu den entsprechenden Imiden, wobei die Verbindungen der Formeln VIII, IX, X und XI jeweils im wesentlichen in stöchiometrischem Verhältnis eingesetzt werden, und wobei $R^1$, $R^2$, $R^3$, $X^1$, $X^2$, Z und n die in Anspruch 1 angegebene Bedeutung haben.

12. Härtbares Stoffgemisch enthaltend

(a) ein Polymer nach Anspruch 1,

(b) ein Epoxidharz und gegebenenfalls

(c) ein Härtungsmittel und/oder einen Härtungsbeschleuniger für Epoxidharze.

13. Vernetzte Produkte erhältlich durch Härtung des Stoffgemisches nach Anspruch 12.

14. Faserverbundsysteme enthaltend Verstärkungsfasern und ein Polymer nach Anspruch 1.

Patentansprüche für folgenden Vertragsstaat: ES

1. Verfahren zur Herstellung von hydroxylgruppen-endständigen stickstoffhaltigen Polymeren der Formel I

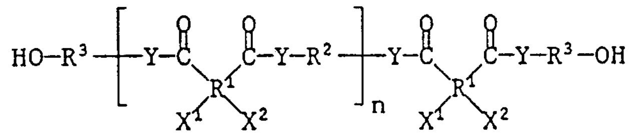 (I),

worin $X^1$ und $X^2$ unabhängig voneinander für -H oder $-\overset{O}{\overset{\|}{C}}Z$ stehen, Z für OH und Y für NH steht oder Z und Y zusammen N bedeuten, n eine ganze Zahl von 1 bis 2000 ist, $R^1$ ein Rest ist, der mindestens einen aromatischen Ring enthält, wobei die Carbonylgruppen an verschiedene Kohlenstoffatome im Ring gebunden sind und, falls mindestens eines von $X^1$ und $X^2$ für die Gruppe $-\overset{O}{\overset{\|}{C}}-Z$ steht, sich diese Gruppe jeweils in ortho- oder peri-Stellung zu einer der Carbonylgruppen befindet, so dass bei einer Cyclisierung fünf- oder sechsgliedrige Imidringe gebildet werden, $R^2$ einen aliphatischen Rest mit mindestens 2 C-Atomen, einen cycloaliphatischen, araliphatischen, carbocyclisch-aromatischen oder heterocyclisch-aromatischen Rest bedeutet, wobei mindestens 10 Mol % der Reste $R^2$ für einen Rest der Formel II und/oder III stehen

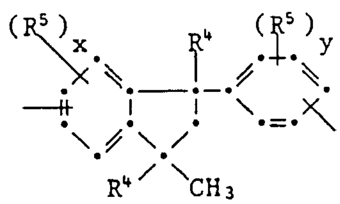 (II), 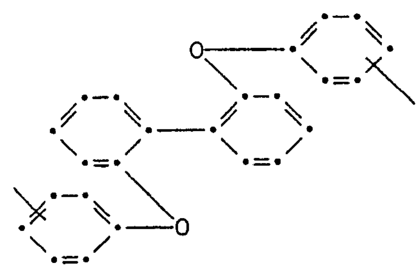 (III),

mit $R^4$ gleich H oder $C_1$-$C_4$-Alkyl, die Reste $R^5$ unabhängig voneinander gleich Wasserstoff, Halogen oder $C_1$-$C_4$-Alkyl, x gleich Null oder eine ganze Zahl von 1-3 und y gleich Null oder eine ganze Zahl von 1-4, und $R^3$ ein zweiwertiger aromatischer Rest mit 6-12 C-Atomen oder ein Rest der Formel IV ist

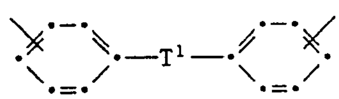 (IV),

worin $T^1$ eine direkte Bindung, Methylen, Isopropyliden, O, CO, NH, S oder $SO_2$ bedeutet, durch Umsetzung eines Diamins der Formel VIII

$H_2N$-$R^2$-$NH_2$ (VIII)

mit einem amidbildenden Derivat einer Di-, Tri- oder Tetracarbonsäure der Formel IX

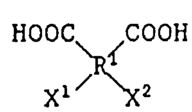 (IX)

zu einem Polymer der Formel X

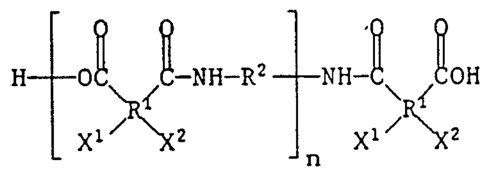 (X),

und anschliessende Umsetzung dieses Polymers oder dessen amidbildenden Derivats mit einem Aminophenol der Formel
$H_2N\text{-}R^3\text{-}OH$ (XI),
gegebenenfalls gefolgt von einer Cyclisierung der so erhaltenen Polymeren, falls $X^1$ und/oder $X^2$ $-\overset{O}{\overset{\|}{C}}-Z$ bedeuten, zu den entsprechenden Imiden, wobei die Verbindungen der Formeln VIII, IX, X und XI jeweils im wesentlichen in stöchiometrischem Verhältnis eingesetzt werden, und wobei $R^1$, $R^2$, $R^3$, $X^1$, $X^2$, Z und n die in Anspruch 1 angegebene Bedeutung haben.

2. Verfahren nach Anspruch 1, worin $X^1$ und $X^2$ jeweils für $-\overset{O}{\overset{\|}{C}}\ Z$ stehen.

3. Verfahren zur Herstellung von Hydroxylgruppen-endständigen Polyimiden nach Anspruch 2 der Formel V

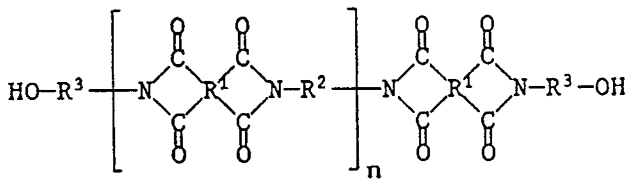 (V),

worin $R^1$, $R^2$, $R^3$ und n die im Anspruch 1 angegebene Bedeutung haben.

4. Verfahren nach Anspruch 1, worin n eine ganze Zahl von 2 bis 200 ist.

5. Verfahren nach Anspruch 1, worin mindestens 30 Mol % der Reste $R^2$ für eine Gruppe der Formel II und/oder III stehen.

6. Verfahren nach Anspruch 1, worin die Reste $R^2$ zu 20-99 Mol % aus Gruppen der Formel II und zu 80-1 Mol % aus Gruppen der Formel III bestehen.

7. Verfahren nach Anspruch 1, worin $R^1$ einen unsubstituierten monocyclischen, einen kondensierten bicyclischen oder einen unkondensierten bicyclischen aromatischen Rest darstellt, wobei bei letzterem die Aromatenkerne über das Brückenglied $-CH_2-$, -O-, -CO- oder $-SO_2$ miteinander verbunden sind, oder einen vierwertigen Rest der Formel VI darstellt

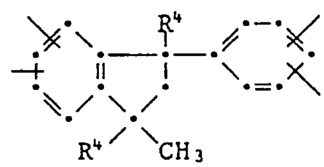 (VI),

worin $R^4$ die in Anspruch 1 angegebene Bedeutung hat.

8. Verfahren nach Anspruch 7, worin $R^1$ ein Rest der Formel VI mit $R^4$ gleich Methyl, oder ein Rest der Formel VII ist

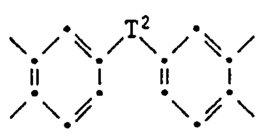 (VII),

worin $T^2$ $CH_2$, O, $SO_2$ oder CO bedeutet.

9. Verfahren nach Anspruch 1, worin $R^3$ 1,2-, 1,3- oder 1,4-Phenylen oder einen Rest der Formel IV bedeutet, worin die freien Bindungen in 4,4′-Stellung sind.

10. Verfahren nach Anspruch 9, worin $R^3$ einen Rest der Formel

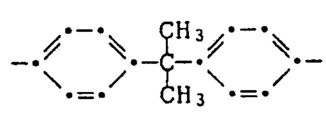

oder 1,4-Phenylen bedeutet.

11. Verfahren zur Herstellung von vernetzten Produkten durch Erhitzen eines härtbaren Stoffgemisches enthaltend

(a) ein Polymer nach Anspruch 1,

(b) ein Epoxidharz und gegebenenfalls

(c) ein Härtungsmittel und/oder einen Härtungsbeschleuniger für Epoxidharze.